# EUROPÄISCHE PATENTSCHRIFT

(11) **EP 0 939 869 B1**
(45) Veröffentlichungstag und Bekanntmachung des Hinweises auf die Patenterteilung: **12.11.2003**
(21) Anmeldenummer: 98944981.4
(22) Anmeldetag: 10.07.1998
(51) Int. Cl.: F16J 15/00, F16J 15/46

(54) **ZUSAMMENBAUFÄHIGES DICHTUNGSSYSTEM**
SEALING SYSTEM ENABLING AN ASSEMBLY
SYSTEME D'ETANCHEITE PERMETTANT UN ASSEMBLAGE

(30) Priorität: 07.08.1997 DE 19734213
(43) Veröffentlichungstag der Anmeldung: 08.09.1999
(73) Patentinhaber: RAG Aktiengesellschaft, 45128 Essen (DE)
(72) Erfinder: GESSNER, Norbert, D-66299 Friedrichsthal (DE)
(86) Internationale Anmeldenummer: DE9801931
(87) Internationale Veröffentlichungsnummer: WO99008025

(56) Entgegenhaltungen:
- DE-C- 933 842
- DE-U- 9 215 605
- US-A- 4 795 173

## Beschreibung

Die Erfindung betrifft ein Verfahren und eine Vorrichtung zum paßgenauen Zusammenbau von Bau- und Maschinenteilen zu einer Baugruppe oder einer Maschine, bei dem feststehende oder zueinander bewegte Maschinenteile gegen den Eintritt und Austritt fluider Stoffe abzudichten sind.

Zum paßgenauen Zusammenbau von Bau- und Maschinenteilen zu einer Baugruppe oder einer Maschine, bei der Fugen zwischen feststehenden oder zueinander bewegten Teilen durch Dichtungskörper oder Dichtungssysteme gegen den Eintritt und Austritt fluider Stoffe abzudichten sind, können die Dichtungskörper während des Zusammenbaues Abmessungen aufweisen, die die erforderlichen Einpaßmaße zum Zusammenbau überschreiten, wodurch der paßgenaue Zusammenbau nicht möglich ist oder die funktionsgerechte Dichtungsposition nicht eingenommen und später nicht mehr korrigiert werden kann.

Der funktionsgerechte Zusammenbau von Bau- und Maschinenteilen z. B. zu einer Maschine mit rotierendem Abtrieb, z. B. zum Antrieb von Förderern oder Gewinnungsmaschinen, erfordert in aufeinander abgestimmten Schritten des Zusammenbaus, bei vormontierten Baugruppen auch des Einbaus, maßgenaue Einpassungen, die keine unmaßhaltigen Abmessungen, insbesondere keine Übermaße, Vorsprünge oder Vorstände zulassen.

Falls bei der Montage derartiger Maschinen oder Baugruppen eine Abdichtung dieser Teile zwingend erforderlich ist, kommt es insbesondere beim Einpassen in nachteiliger Weise häufig zu einer Verschiebung oder auch Zerstörung des zum Abdichten vorgesehenen elastischen Dichtungskörpers durch das einzupassende Bauteil.

Aufgabe der Erfindung ist es deshalb, ein Verfahren zum paßgenauen Zusammenbau von Maschinenteilen oder ganzen Baugruppen anzugeben, bei dem feststehende oder zueinander bewegte Maschinenteile, die gegen den Eintritt und Austritt fluider Stoffe abzudichten sind, ohne Beeinträchtigung des Dichtungssystems gemäß ihrer konstruktiven Vorgabe eingepaßt werden können.

Die Aufgabe wird erfindungsgemäß dadurch gelöst, daß ein elastischer Dichtungskörper während des Zusammenbaus der miteinander abzudichtenden Maschinenteile in eine in einem Maschinenteil vorgefertigte umlaufende und zum Dichtungssitz offene Nut versenkt wird und daß nach dem Zusammenbau der Maschinenteile, der Dichtungskörper innerhalb des durch den versenkten Dichtungskörper abgedichteten Hohlraumes in der Nut über eine nach außen reichende Verbindung ein Überdruck aufgebaut und hierdurch der Dichtungskörper in den Dichtungssitz verlagert wird.

Zur Durchführung des erfindungsgemäßen Verfahrensganges werden dazu in vorteilhafter Weise die elastischen Dichtungen, in der Regel gummielastische Dichtungsringe las Dichtungskörper, für den Zusammenbau auf eine gestreckte Länge größer als die, die der eigentlichen Dichtungsposition entspricht vorgespannt und in einer an einem Maschinenteil dazu vorgefertigten, umlaufenden Nut versenkt. Dazu werden sie auf den dafür vorgesehenen Sitz - nicht den Dichtungssitz - aufgezogen, mit den unmittelbar benachbarten Teilen paßgenau und folgegerecht zusammengesetzt. Die Verlagerung des Dichtungskörpers von der Einbauposition während des Zusammenbaus in die funktionsgerechte Dichtungsposition , also auf den Dichtungssitz, nach dem Zusammenbau erfolgt durch unmittelbare oder mittelbare Druckbeaufschlagung mit einem Druckmittel in Verlagerungsrichtung. Zum Druckaufbau ist als Druckmittel eine Flüssigkeit, z. B. Hydraulikflüssigkeit oder ein Gas, z. B. Druckluft vorteilhaft, obwohl dies z. B. auch mittels Schmierfett erfolgen kann.

Das Verfahren wird weiterhin dadurch sehr vorteilhaft gestaltet, daß dem in der Nut zu versenkenden Dichtungskörper eine Hilfsdichtung vorgelagert wird. Der Überdruck, der so in dem durch die Hilfsdichtung abgedichteten Hohlraum der Nut durch den Druckaufbau erreicht wird, bewirkt, daß der Dichtungskörper durch die aufgrund des Überdruckes sich in der Nut verschiebende Hilfsdichtung in Richtung Dichtungssitz in den Dichtungssitz verlagert wird.

Weiterhin kann in vorteilhafter Weise zur Positionierung des in den Dichtungssitz verlagerten Dichtungskörpers zwischen Dichtungskörper und Hilfsdichtung mindestens ein weiteres Positionierelement aus nichtelastischem Material vorgesehen werden, das konstruktiv vorgeb- und einhaltbare Abstände zwischen Hilfsdichtung und Dichtungskörper bedingt. Dadurch wird auch erreicht, daß der Druckraum durch die Hilfsdichtung abgedichtet bleibt und kein Druckmittel abströmen kann.

Das erfindungsgemäße Verfahren kann sowohl zur statischen Abdichtung, dazu verwendet man üblicherweise sogenannte "O-Ringe", als auch zum Abdichten rotierender Bauteile, dazu verwendet man üblicherweise sogenannte "Turcan-Glyd-Ringe", eingesetzt werden.

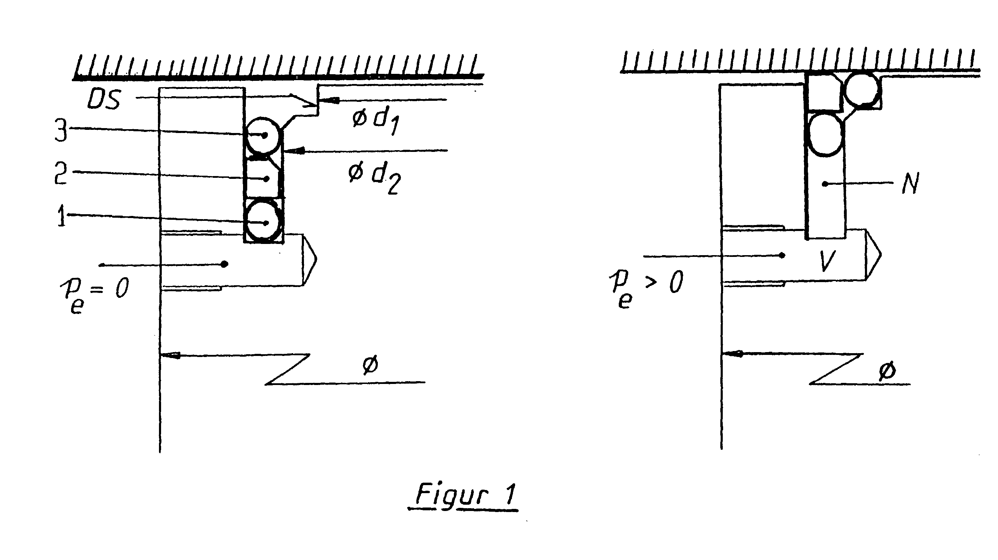

Figur 1 zeigt eine Vorrichtung als Dichtungssystem, die in einer einfachen Ausführung zur statischen Abdichtung zwischen zwei Maschinenteilen aufgebaut ist und deren Bestandteile entsprechend dem erfindungsgemäßen Verfahren in dem den Dichtungssitz enthaltenden Maschinenteil, in einer umlaufenden Nut_im Verlauf des Zusammenbaus versenkt bleiben.

Bestandteile des Dichtungssystems sind:
- Hilfsdichtung 1,
- Führungsring 2, als weiteres Positionierelement und
- Dichtungskörper 3.

In das den Dichtungssitz DS aufweisende Maschinenteil ist eine umlaufende Nut N eingearbeitet, wobei Dichtungssitz DS und Nut N in offener Verbindung miteinander stehen. Dabei ist der Dichtungskörper 3 aus der Nut N durch den Druckaufbau über die offene Verbindung in den Dichtungssitz DS verlagerbar. Die Nut N weist - zur Druckbeaufschlagung - konstruktiv mindestens eine absperrbare Verbindung V nach außen auf.

In einer bei zylindrischen Bauteilen normalerweise kreisförmigen Nut, die in ihrem Innendurchmesser d₂ größer ist als der Durchmesser d₁ des Dichtungssitzes DS, wird zuerst die Hilfsdichtung 1 eingebaut auf die anschließend der Führungsring 2 als Positionierelement aufgeschoben wird.

Der elastische Dichtungskörper 3 besitzt in seiner entspannten Form als gummielastischer Dichtungsring einen kleineren Innendurchmesser als die Nut und muß demzufolge zum Einlegen in die Nut geweitet sein.

Diese elastische Vorspannung ist notwendig, um nach Zusammenbau der Bauteile durch Druckbeaufschlagung (Effektivdruck pₑ > 0 ) über die Verbindung V die Aktivierung des Dichtungssystemes einzuleiten und den Dichtungskörper 3 an seine vorgesehene Dichtposition auf den Dichtungssitz DS zu verlagern.

Die Hilfsdichtung 1 wird dazu nach dem Zusammenbau der Bauteile z. B. über einen fast bis zum Nutgrund reichenden Innengewindeanschluß unmittelbar mit Druckluft, Fett oder Druckflüssigkeit beaufschlagt. Diese Druckwirkung schiebt dann alle weiteren zum Dichtungssystem gehörigen Komponenten wie das Positionierelement Führungsring 2 und den Dichtungskörper 3 zum Nutrand in Richtung Dichtungssitz. Durch die elastische Vorspannung rutscht der Dichtungskörper 3 über den abgeschrägt ausgeführten Nutabsatz in seine funktionelle Dichtposition auf dem Dichtungssitz DS vom Durchmesser d₁.

Der Führungsring 2 als Positionierelement schiebt sich über den Dichtungskörper 3 und hält ihn dadurch in der Dichtposition auf dem Dichtungssitz DS verpreßt ihn ein wenig und verhindert so ein mögliches Austreten der Hilfsdichtung 1 aus dem Nutraum. Die offene Verbindung zwischen Nut und Dichtungssitzraum wird auf diese Weise ebenfalls abgedichtet.

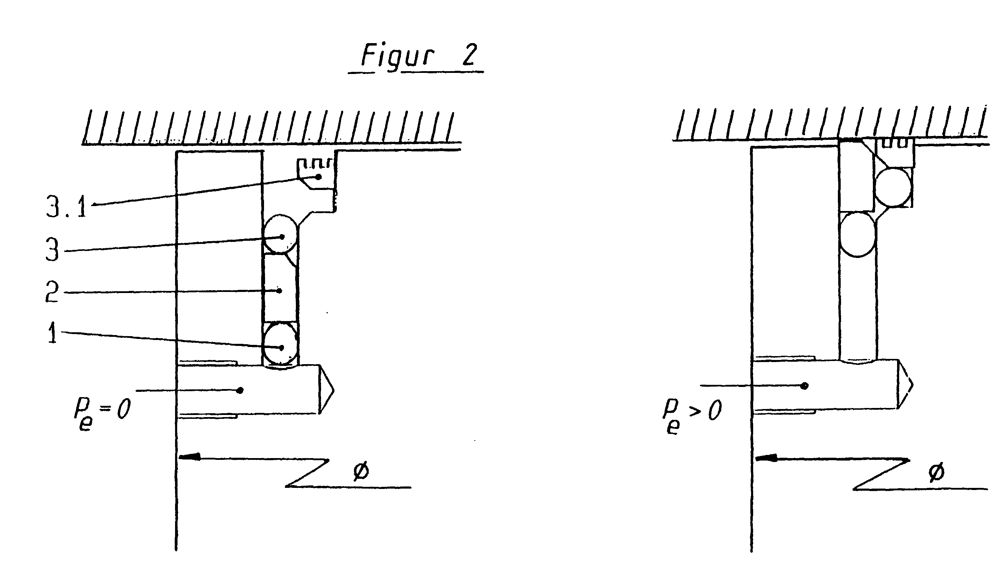

Figur 2 zeigt eine Ausführung zum Abdichten rotierender Bau- oder Maschinenteile, bei welchen der eigentliche Dichtungskörper 3 vor dem Verschleiß durch die Drehbewegung dadurch geschützt wird, daß zwischen der Fläche an der der Dichtungskörper 3 anschleift und den Dichtungskörper 3 selbst ein zusätzlicher Gleitring 3.1 eingebaut ist. Dieser wird durch den Führungsring 2 als Positionierelement und den Dichtungskörper 3 in die funktionelle Position gedrängt und dort gehalten. Die Dichtaufgabe des Dichtkörpers 3 wird dadurch nur etwas nach zurück verlegt.

### Bezugszeichenliste:

- 1: Hilfsdichtung
- 2: Positionierelement, z.B. Führungsring
- 3: Dichtungskörper, gummielastisch
- 3.1: Dichtungskörper-Schutz

- DS: Dichtungssitz
- N: Nut
- V: absperrbare Verbindung nach außen reichend
- d₁: Sitzdurchmesser DS
- d₂: Sitzdurchmesser N

## Patentansprüche

1. Verfahren zum paßgenauen Zusammenbau von Bau- und Maschinenteilen zu einer Baugruppe oder einer Maschine, bei dem feststehende oder zueinander bewegte Maschinenteile gegen den Eintritt und Austritt fluider Stoffe abzudichten sind,
**dadurch gekennzeichnet,**
**daß** ein elastischer Dichtungskörper (3) während des Zusammenbaus der miteinander abzudichtenden Maschinenteile in eine in einem Maschinenteil vorgefertigte umlaufende und zum Dichtungssitz offene Nut versenkt wird und
**daß** nach dem Zusammenbau der Maschinenteile der Dichtungskörper (3) innerhalb des durch den versenkten Dichtungskörper (3) abgedichteten Hohlraumes in der Nut (N) über eine nach außen reichende Verbindung (V) ein Überdruck aufgebaut und hierdurch der Dichtungskörper (3) in den Dichtungssitz (DS) verlagert wird.

2. Verfahren nach Anspruch 1,
**dadurch gekennzeichnet,**
**daß** zum Druckaufbau eine Flüssigkeit verwandt wird.

3. Verfahren nach Anspruch 1,
**dadurch gekennzeichnet,**
**daß** zum Druckaufbau ein Gas verwandt wird.

4. Verfahren nach Anspruch 1,
**dadurch gekennzeichnet,**
**daß** dem in der Nut (N) zu versenkenden Dichtungskörper (3) eine Hilfsdichtung (1) vorgelagert wird,
**daß** der Überdruck in dem durch die Hilfsdichtung (1) abgedichteten Hohlraum der Nut (N) aufgebaut wird und **daß** der Dichtungskörper (3) durch die aufgrund des Überdruckes sich in der Nut (N) verschiebende Hilfsdichtung (1) in den Dichtungssitz (DS) verlagert wird.

5. Verfahren nach Anspruch 4,
**dadurch gekennzeichnet,**
**daß** zur Positionierung des in den Dichtungssitz (DS) verlagerten Dichtungskörpers (3) zwischen Dichtungskörper (3) und Hilfsdichtung (1) mindestens ein weiteres Positionierelement (2) aus nichtelastischem Material vorgesehen wird.

6. Verfahren nach einem oder mehreren der Ansprüche 1 bis 5,
**dadurch gekennzeichnet,**
**daß** zum Schutz des in den Dichtungssitz (DS) verlagerten Dichtungskörpers (3) zwischen Dichtungskörper (3) und angrenzender Dichtfläche des anderen Maschinenteiles ein weiteres Element (3.1) aus nicht gummielastischem Material vorgesehen wird.

7. Vorrichtung zur Durchführung des Verfahrens nach Anspruch 1,
wobei Maschinenteile gegen den Eintritt oder Anstritt fluider Stoffe abzudichten sind und ein Maschinenteil einen Dichtungssitz zur Aufnahme eines Dichtungskörpers anfweist,
**dadurch gekennzeichnet,**
**daß** in das den Dichtungssitz (DS) aufweisende Maschinenteil eine umlaufende Nut (N) eingearbeitet ist,
**daß** Dichtungssitz (DS) und Nut (N) in offener Verbindung (V) miteinander stehen,
**daß** der Dichtungskörper (3) aus der Nut (N) durch die offene Verbindung in den Dichtungssitz (DS) verlagerbar ist und
**daß** die Nut (N) mindestens eine absperrbare Verbindung (V) nach außen aufweist.

8. Vorrichtung nach Anspruch 7,
**dadurch gekennzeichnet,**
**daß** innerhalb der Nut (N) eine weitere verschiebbare elastische Hilfsdichtung (1) dem Dichtungskörper (3) in Richtung Nutende vorgelagert ist.

9. Vorrichtung nach Anspruch 8,
**gekennzeichnet durch**
mindestens ein weiteres Positionierelement (2) zwischen Dichtungskörper (3) und Hilfsdichtung (1).

## Claims

1. Method for precision assembling of components and machine parts to form an assembly or a machine, in which machine parts which are stationary or moved relative to one another are to be sealed against ingress and egress of fluid substances, **characterised in that** during the assembling of the machine parts to be sealed with one another an elastic sealing body (3) is sunk into a circumferential slot which is prefabricated in one machine part and open to the sealing seat, and **in that** after the assembling of the machine parts a positive pressure is built up within the cavity in the slot (N) sealed by the sunk sealing body (3) through a connection (V) extending to the exterior and through this the sealing body (3) is moved into the sealing seat (DS).

2. Method according to claim 1, **characterised in that** a liquid is used to build up the pressure.

3. Method according to claim 1, **characterised in that** a gas is used to build up the pressure.

4. Method according to claim 1, **characterised in that** an auxiliary seal (1) is mounted in front of the sealing body (3) to be sunk in the slot (N), **in that** the positive pressure is built up in the cavity of the slot (N) sealed by the auxiliary seal (1) and **in that** the sealing body (3) is moved into the sealing seat (DS) by the auxiliary seal (1) moving in the slot (N) due to the positive pressure.

5. Method according to claim 4, **characterised in that** at least one further positioning element (2) made of non-elastic material is provided between the sealing body (3) and the auxiliary seal (1) for positioning of the sealing body (3) moved into the sealing seat (DS).

6. Method according to one or more of claims 1 to 5, **characterised in that** a further element (3.1) made of a non-elastic material is provided between the sealing body (3) and the adjoining sealing face of the other machine part for protection of the sealing body (3) moved into the sealing seat (DS).

7. Device for implementing the method according to claim 1 in which machine parts are to be sealed against ingress or egress of fluid substances and a machine part exhibits a sealing seat for reception of a sealing body, **characterised in that** a circumferential slot (N) is formed in the machine part exhibiting the sealing seat (DS), **in that** the sealing seat (DS) and the slot (N) are in open connection (V) with one another, **in that** the sealing body (3) can be moved out of the slot (N) through the open connection into the sealing seat (DS) and **in that** the slot (N) exhibits at least one connection (V) to the exterior which can be shut off.

8. Device according to claim 7, **characterised in that** a further displaceable elastic auxiliary seal (1) is mounted inside the slot (N) in front of the sealing body (3) towards the end of the slot.

9. Device according to claim 8, **characterised by** at least one further positioning element (2) between the sealing body (3) and the auxiliary seal (1).

## Revendications

1. Procédé d'assemblage ajusté de pièces de construction et de pièces de machine pour former un ensemble ou une machine, selon lequel les parties fixes et mobiles de la machine assurent l'étanchéité contre l'entrée et la sortie de matières fluides,
**caractérisé en ce que**
pendant l'assemblage des parties de machine à rendre étanches l'une par rapport à l'autre, on enfonce un organe d'étanchéité élastique (3) dans une rainure périphérique, réalisée au préalable dans une partie de la machine, et ouverte vers le siège d'étanchéité, et
après l'assemblage des parties de la machine on déplace l'organe d'étanchéité (3) à l'intérieur de la cavité rendue étanche par l'organe d'étanchéité (3), enfoncé, dans la rainure (N) par une surpression transmise par une liaison (V) arrivant à l'extérieur et on déplace ainsi l'organe d'étanchéité (3) pour le mettre dans le siège d'étanchéité (DS).

2. Procédé selon la revendication 1,
**caractérisé en ce qu'**
on utilise un liquide pour établir la pression.

3. Procédé selon la revendication 1,
**caractérisé en ce qu'**
on utilise un gaz pour établir la pression.

4. Procédé selon la revendication 1,
**caractérisé en ce qu'**
un joint auxiliaire (1) dans la rainure (N) est monté en amont de l'organe d'étanchéité (3), enfoncé, la surpression est établie dans la cavité de la rainure (N) rendue étanche par le joint auxiliaire (1) et on déplace l'organe d'étanchéité (3) dans le siège d'étanchéité (DS) par le joint auxiliaire (1) qui se déplace dans la rainure (N) sous l'effet de la surpression.

5. Procédé selon la revendication 4,
**caractérisé en ce que**
pour positionner l'organe d'étanchéité (3) déplacé au siège d'étanchéité (DS), entre l'organe d'étanchéité (3) et un joint auxiliaire (1) on a au moins un autre élément de positionnement (2) en une matière non élastique.

6. Procédé selon l'une ou plusieurs des revendications 1 à 5,
**caractérisé en ce que**
pour protéger l'organe d'étanchéité (3) mis en place dans le siège d'étanchéité (DS), on prévoit un autre élément (3.1) qui est en une matière n'ayant pas l'élasticité du caoutchouc, entre le corps d'étanchéité (3) et la surface d'étanchéité adjacente de l'autre partie de machine.

7. Dispositif pour la mise en oeuvre du procédé selon la revendication 1, pour rendre étanches des parties de machines contre la pénétration ou la sortie de matières fluides et dont une partie de machine comporte un siège d'étanchéité pour recevoir un organe d'étanchéité,
**caractérisé en ce que**
la partie de machine comportant le siège d'étanchéité (DS) possède une rainure périphérique (N), usinée dans cette partie de machine,
le siège d'étanchéité (DS) et la rainure (N) communiquent par une liaison ouverte (V),
l'organe d'étanchéité (3) peut être déplacé hors de la rainure (N) par une liaison ouverte dans le siège d'étanchéité (DS), et
la rainure (N) comporte au moins une liaison (V) vers l'extérieur, susceptible d'être fermée.

8. Dispositif selon la revendication 7,
**caractérisé en ce qu'**
un autre joint auxiliaire élastique (1), coulissant est prévu dans la rainure (N) en amont de l'organe d'étanchéité (3) dans la direction d'extrémité de la rainure.

9. Dispositif selon la revendication 8,
**caractérisé en ce qu'**
au moins un autre élément de positionnement (2) est prévu entre l'organe d'étanchéité (3) et le joint auxiliaire (1).
